# EUROPEAN PATENT SPECIFICATION

(11) **EP 3 563 925 B1**
(45) Date of publication and mention of the grant of the patent: **07.06.2023**
(21) Application number: 19171335.3
(22) Date of filing: 26.04.2019
(51) Int. Cl.: B01D 53/32, B01D 53/83, B01D 53/86, B01J 8/18, B01J 8/26, B01J 8/42, B01J 8/44, B01J 19/08

(54) **APPARATUS AND METHOD FOR REMOVING NITROGEN OXIDES AND CARBON MONOXIDE FROM EXHAUST GAS USING CATALYTIC PURIFICATION OF GAS EMISSIONS**
VORRICHTUNG UND VERFAHREN ZUR ENTFERNUNG VON STICKOXIDEN UND KOHLENSTOFFMONOXID AUS ABGAS MITHILFE VON KATALYTISCHER REINIGUNG VON GASEMISSIONEN
APPAREIL ET PROCÉDÉ D'ÉLIMINATION D'OXYDES D'AZOTE ET DE MONOXYDE DE CARBONE D'UN GAZ D'ÉCHAPPEMENT UTILISANT L'ÉPURATION CATALYTIQUE DES ÉMISSIONS DE GAZ

(30) Priority: 30.04.2018 LT 2018516
(43) Date of publication of application: 06.11.2019
(73) Proprietor: Vilniaus Gedimino technikos universitetas, 10223 Vilnius (LT)
(72) Inventor: BALTRENAS, Pranas, 07143 Vilnius (LT); URBANAS, Davyd, 10223 Vilnius (LT)
(74) Representative: Pranevicius, Gediminas

(56) References cited:
- EP-A2- 0 937 870
- WO-A1-92/19361
- WO-A2-2007/072440
- CN-A- 104 492 256
- CN-U- 201 537 443
- US-A1- 2004 219 084
- US-A1- 2014 305 790

## Description

### TECHNICAL FIELD

The invention relates to apparatus and methods for catalytic purification of gas emissions, in particular to the purification of gas emissions by removing nitrogen oxides and carbon monoxide with the use of fluidized bed created by a high voltage electric field.

### BACKGROUND ART

Apparatus for catalytic purification of gas emissions by removing nitrogen oxides (NOₓ) and carbon monoxide (CO) can be applied for the purification of gas emissions produced by large thermal power plants and local heating systems (ovens, gas and solid fuel boilers) located at households, commercial and institutional objects which can be considered as the main stationary sources of mentioned pollutants. Moreover, apparatus for the purification of gas emissions from nitrogen oxides and carbon monoxide can be applied at industrial facilities in chemical industry, oil refining, metal production.

The method of selective catalytic conversion is widely used in the field of gas purification from NOₓ and CO due to its high efficiency. According to the accommodation technique inside the gas purification apparatus, all catalysts can be divided into the block and load types. The block catalysts have a certain fixed shape, while the load-type catalysts occupy an operating volume of a catalytic chamber which they are loaded into for the further use during the purification of gas emissions.

Depending on the configuration the following main three groups of catalysts can be outlined: foam, honeycomb and porous. Porous catalysts are related to the load type while foam and honeycomb ones - to the block type. The honeycomb catalysts which have a lot of small parallel channels ensure a low pressure drop during the purification of gas emissions. Thus, they can be successfully applied to purify gases characterized by relatively high volumetric flow rates. Porous catalysts due to their structure have a higher coefficient of mass transfer and therefore can provide higher efficiency of gas purification. However, greater aerodynamic resistance created during the process of gas purification limits the possibility of their widespread application. Thus, it is necessary to apply an apparatus for the purification of gas emissions which allows to use the porous catalysts and characterized by a low pressure drop.

The prototype of the present invention is the catalytic gas purification apparatus described in the Chinese patent application CN102658025. The apparatus presented in this patent application is aimed at the purification of gas emissions, in particular at the reduction of nitrogen oxides to the molecular nitrogen N₂. The apparatus for the purification of gas emissions from NOₓ comprises a waste heat boiler, an ammonia injecting device, an ammonia/air mixer, a fixed bed catalyst, and a chimney. The ammonia injecting device and the catalytic bed according to the said patent application are located either at the end of the waste heat boiler upstream of the chimney or in a separately constructed connecting channel that is located parallel to the chimney and has direct connections whit it in lower and upper parts.

The contaminated gas flow from the waste heat boiler is mixed with the reductant ammonia, which is injected into the system of contaminated gas removal upstream of the catalyst. Then, contaminated gas passes through the catalyst where the reduction of nitrogen oxides with the formation of N₂ and H₂O occurs. After that, the purified gas is released through the chimney to the atmosphere.

The main disadvantage of the said prototype is that the use of the fixed bed catalyst for the purification of gas emissions results in the formation of a large pressure drop which in turn significantly reduces the performance of the whole gas purification system making problematical the use of such system at large fuel combustion objects. Furthermore, due to the use of fixed bed catalysts the elements of a catalytic load adjoin each other and consequently, only a part of their surface is available for the conversion of pollutants NOₓ and CO.

Some patent applications dedicated to catalytic purification of gaseous emissions, in particular to catalytic conversion of NOₓ and CO describe usage of an electric field in catalytic reactors to enhance catalytic properties. Among such documents, especially patent applications US 2004/0219084 A1 and US 2014/0305790 can be mentioned.

Apparatus reported in US 2004/0219084 A1 is aimed to oxidation of gaseous hydrocarbons and particulate carbonaceous material and reduction of nitrogen oxides with the use of a loosely packed fixed bed catalytic material located between electrodes across which an electrical voltage is applied providing generation of an electrical discharge required for effective catalytic reaction. Different embodiments are considered in this patent application according to which either only oxidation catalytic material is located between electrodes and exposed to electrical discharge or both oxidation and reduction catalytic materials are located between electrodes establishing an electrical discharge to activate the required reactions.

Another invention reported in US 2014/0305790 describes the apparatus dedicated to removal of gaseous or aqueous pollutants such as particles, microorganisms of the virus, bacteria, mold, and algae types, and chemical pollutants of the VOC, SVOC, BTEX, HAP (C10-C25), HAAA, NOₓ, SOₓ, H₂S, CO, and O₃ types, halogenated compounds, endocrine disruptors, and all olfactive molecules by means of simultaneous cold-plasma and UV-photocatalytic treatment, wherein dielectric barrier discharge devices generating a cold plasma are integrated into and located within a bed of porous microbeads placed inside the reactor. In this invention both the fixed bed and the fluidized bed are considered, wherein the fluidized bed is proposed to be created by over-pressurizing or under-pressurizing the bed of porous microbeads using a pump or a fun.

### SUMMARY OF THE INVENTION

The present invention refers to an apparatus in line with the second embodiment of the invention for the purification of gas emissions from nitrogen oxides (NOₓ) and carbon monoxide (CO) with the use of load-type catalysts, which provides a high purification efficiency without reduction in system performance, as defined in the two independent claims 1 and 2.

The simultaneous removal of nitrogen oxides and carbon monoxide from a gas flow can be carried out by a sequential installation of two catalysts: oxidation and reduction. However, this is not a scientific or technical novelty and therefore is not under consideration to be emphasized in this invention.

The specialty of the gas purification apparatus described in the present invention is the development of moving granular catalysts operating as a fluidized bed created by a high voltage electric field affecting the catalytic load. A fluidized bed created ensures an enhanced contact between catalytic grains and a gas flow to be purified promoting the efficiency of gas purification at much lower aerodynamic resistance compared to a fixed bed catalyst.

Two embodiments of the apparatus for purification of gas emissions from nitrogen oxides and carbon monoxide using the moving granular catalysts were proposed. According to the first implementation case, which is not in line with the invention, the catalytic grains are placed on a series of small-meshed grids located in parallel one above the other inside the channel for removal of contaminated gases. According to the second variant of implementation, the catalytic material is placed on a plate located lengthwise to the channel for removal of contaminated gases, while the second plate is placed above the catalytic load in parallel to the first one. In the case of the second implementation, the catalytic load is restricted from both the right and the left sides by vertical small-meshed grids which shape is identical to the inner cross section of the channel for removal of contaminated gases. Under the influence of high voltage, the catalytic load transforms into the fluidized bed which serves as a catalyst for the pollutants NOₓ and CO conversion.

In both cases of implementation of the apparatus for gas emissions purification from NOₓ and CO using the moving catalytic layer, the oxidation (for the CO oxidation) and the reduction (for the NOₓ reduction) catalysts are installed sequentially inside the contaminated gas removal channel and as in traditional technological schemes the reductant injection into the contaminated gas removal channel is provided upstream of the reduction catalyst.

To prepare the active coating of the catalytic grains such materials as lightweight expanded clay aggregate and volcanic stone are proposed to be used in the present invention as a substrate. These materials are characterized by high porosity and highly developed surface, which has a significant impact on the efficiency of coating deposition. The additional advantage of the substrate materials proposed is that there is no need to pre-treat their surface in order to deposit the active coating. Moreover, the expanded clay aggregate is made from natural clay, and the volcanic stone is a hardened magma, i.e. the product of volcanic activity. Thus, both these materials are economically feasible and available. Catalytic grains produced from both the expanded clay aggregate and the volcanic stone are lightweight due to their high porosity, which allows creating the fluidized bed easier.

The already known materials such as oxides of transition metals, for example, Mn, Ti, V, Fe, Cu, Mo, W, etc., can be successfully applied for the active coating formation. However, it should be mentioned that bimetallic and composite oxide catalysts are considered as more effective compared with single metal oxide catalysts.

### BRIEF DESCRIPTION OF DRAWINGS

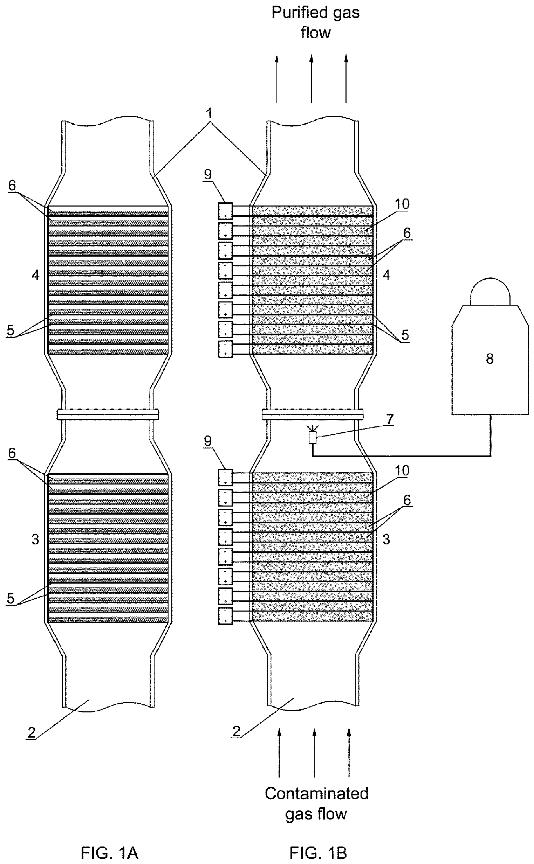

FIG. 1A is a schematic view of the inactive state of the apparatus for catalytic purification of gas emissions from nitrogen oxides and carbon monoxide according to the first embodiment, which is not in line with the invention.
FIG. 1B is a schematic view of the apparatus for catalytic purification of gas emissions from nitrogen oxides and carbon monoxide according to the first embodiment, which is not in line with the invention.

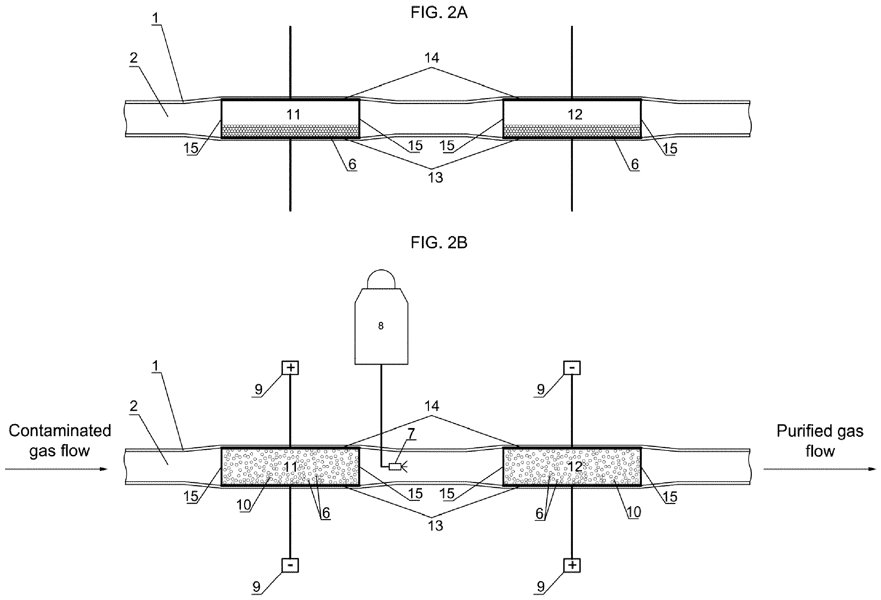

FIG. 2A is a schematic view of the inactive state of the apparatus for catalytic purification of gas emissions from nitrogen oxides and carbon monoxide according to the second embodiment.
FIG. 2B is a schematic view of the apparatus for catalytic purification of gas emissions from nitrogen oxides and carbon monoxide according to the second embodiment.

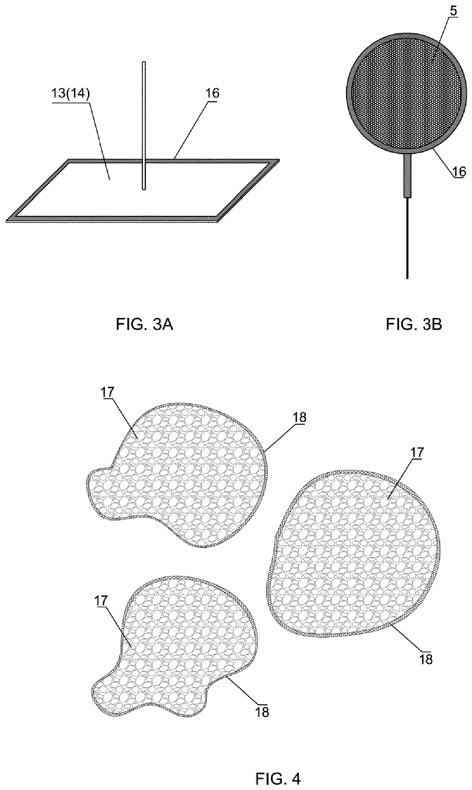

FIG. 3A depicts the catalyst's plate with a ceramic dielectric coating.
FIG. 3B shows the catalyst's small-meshed grid with a ceramic dielectric coating.
FIG. 4 presents the catalytic grains coated with metal oxides.

### DETAILED DESCRIPTION OF THE INVENTION

The apparatus for gas purification according to the first embodiment, which is not in line with the invention, comprises the dielectric casing 1; the contaminated gas removal channel 2 inside which the oxidation 3 and the reduction 4 catalysts are installed sequentially and consist of the small-meshed parallel grids 5 with the load of catalytic grains 6 located between them; the device 7 for the injecting of a reductant 8 into the contaminated gas removal channel 2; the sources 9 of high voltage alternating current connected to the grids 5 in order to create a high voltage electric field which in turn leads to the formation of the fluidized bed 10 from the catalytic grains 6.

The apparatus for gas purification according to the second embodiment of the invention comprises the dielectric casing 1; the device 7 for the injecting of a reductant 8 into the contaminated gas removal channel 2 inside which the oxidation 11 and the reduction 12 catalysts are installed sequentially and consist of two parallel plates 13 and 14 (the cross section of the contaminated gas removal channel in the zone of plates' location has a rectangular shape) connected to the sources 9 of high voltage alternating current in order to create a high voltage electric field between them, which in turn leads to the formation of the fluidized bed 10 from the catalytic grains 6 located between the plates 13 and 14 and restricted from both the right and the left sides by the small-meshed grids 15.

To prevent the current flow between the small-meshed grids 5 in the first embodiment, which is not in line with the invention, and between plates 13 and 14 in the second embodiment through the walls of contaminated gas removal channel 2, all joints of the grids 5 and the plates 13 and 14 with the contaminated gas removal channel 2 have the ceramic dielectric coating 16.

The catalytic grains, used in the present invention, are 4-6 mm in diameter and consist of the substrate - lightweight expanded clay aggregate or a volcanic stone 17 covered with the active coating 18 made of transition metal oxides (bimetallic or polymetallic oxide coating).

### The operation principle of the apparatus

According to the first embodiment, which is not in line with the invention, a gas flow which contains NOₓ and CO enters the contaminated gas removal channel 2 where the load-type moving catalysts, i.e. the oxidation catalyst 3 and reduction catalyst 4 are located sequentially. The reductant 8 required for the NOₓ conversion is injected into the contaminated gas removal channel 2 upstream the reduction catalyst 4 and downstream the oxidation catalyst 3. The fluidized bed 10 made of the catalytic grains 6 is formed by 20-40 kV high voltage electric field created between the small-meshed grids 5 located in parallel inside the catalysts 3 and 4. When contaminated gas passes through the oxidation catalyst 3, the oxidation of carbon monoxide to CO₂ takes place. After that, partially purified gas passes through the reduction catalyst 4 where NOₓ reduces to the molecular nitrogen. The purified gas after the reduction catalyst is emitted to the atmosphere.

According to the second embodiment of the present invention, a gas flow which contains NOₓ and CO enters the contaminated gas removal channel 2 where the load-type moving catalysts, i.e. the oxidation catalyst 11 and reduction catalyst 12 are located sequentially. The reductant 8 required for the NOₓ conversion is injected into the contaminated gas removal channel 2 through the injecting device 7 upstream the reduction catalyst 12 and downstream the oxidation catalyst 11. The fluidized bed 10 made of the catalytic grains 6 is formed by 20-40 kV high voltage electric field created between the plates 13 and 14 located in parallel inside both the catalyst 11 and the catalyst 12. When contaminated gas passes through the oxidation catalyst 11, the oxidation of carbon monoxide to CO₂ takes place. After that, partially purified gas passes through the reduction catalyst 12 where NOₓ reduces to the molecular nitrogen. The purified gas after the reduction catalyst is emitted to the atmosphere.

In both the first and the second embodiments, the catalytic grains are loaded in such a way as to fill 30-50 % of the space existing between two adjacent small-meshed grids 5, considering the first embodiment, which is not in line with the invention, and plates 13 and 14, considering the second embodiment. The high voltage alternating current is applied to the small-meshed grids 5 in the first embodiment, which is not in line with the invention, and plates 13 and 14 in the second embodiment using the sources 9 of high voltage alternating current which leads to the formation of the high voltage electric field between the grids 5 in the first embodiment, which is not in line with the invention, and plates 13 and 14 in the second embodiment. The electric field formed according to the well-known physical law causes the movement of the catalytic grains 6 between two adjacent parallel small-meshed grids 5 in the first embodiment, which is not in line with the invention, and plates 13 and 14 in the second embodiment to one of which the charge "+" is applied, while to another - "-". The catalytic grains moving between the grids 5 and plates 13 and 14 bump into each other causing the chaotic movement. In both embodiments, the catalysts are considered as closed systems, i.e. the catalytic grains during the process of gas purification are in the constant movement inside the catalysts, however, they do not circulate in the system of contaminated gas removal channel. The intensity of movement of catalytic grains can be regulated by changing the distance between the small-meshed grids 5 or plates 13 and 14. Bringing together the plates or grids leads to an increase in the movement velocity of catalytic grains. The purification of gas emissions from nitrogen oxides and carbon monoxide proceeds in the catalytic fluidized bed. To increase the efficiency of gas purification the number of parallel small-meshed grids and plates with the load of catalytic grains between them can be increased.

Due to the movement of catalytic grains inside the fluidized bed 10, it is possible to ensure high efficiency of gas purification along with a small pressure drop. Moreover, in both embodiments of the present invention, the fluidized bed 10 of the reduction catalyst also serves as a dynamic mixer ensuring an effective mixing of a reductant with a gas flow.

## Claims

1. An apparatus for removing nitrogen oxides and carbon monoxide from gas emissions, comprising a contaminated gas removal channel where catalysts for CO oxidation and NOₓ reduction are located sequentially, a catalytic load placed inside each of the catalysts, a device for injecting a reductant into a contaminated gas removal channel, **characterized in that** the CO oxidation catalyst (11) and the NOₓ reduction catalyst (12) comprise plates (13, 14), located parallel to each other and lengthwise to the contaminated gas removal channel (2), between which the load of catalytic grains (6) is placed and to which sources (9) of high voltage alternating current are connected in order to create a high voltage electric field between the plates (13, 14) inside the catalysts (11, 12) sufficient to fluidize the load of catalytic grains (6), the oxidation and reduction catalysts (11, 12) being closed from both the right and the left sides by vertical small-meshed grids (15), having the shape identical to the inner cross section of the catalysts (11, 12), dedicated to restrict the zone of the load of catalytic grains (6).

2. A method for removing nitrogen oxides and carbon monoxide from gas emissions comprising an oxidation of carbon monoxide CO to carbon dioxide CO₂ followed by a reduction of nitrogen oxides NOₓ to molecular nitrogen N₂ by a reaction with a reductant additionally injected to a contaminated gas removal channel (2) between an oxidation catalyst and a reduction catalyst, **characterized in that** during the purification of gas emissions, the load of catalytic grains (6) under the influence of a high voltage electric field created between plates (13, 14) by sources (9) of high voltage alternating current acts as a chaotically moving fluidized bed (10), which occupies the whole space between the adjacent plates (13, 14) and inside which the conversion of the pollutants CO and NOₓ takes place, whereby the plates (13, 14) are located parallel to each other and lengthwise to the contaminated gas removal channel (2), and the catalytic load (6) is restricted from both the right and the left sides of the plates (13, 14) by vertical small-meshed grids (15), which shape is identical to the inner cross section of the channel for removal of contaminated gases.

3. The method according to claim 2, **characterized in that** the intensity of the fluidized bed movement is regulated by changing a vertical distance between the plates (13) and (14).

4. The method according to claim 2, **characterized in that** the catalytic grains (6) are loaded in such a way as to fill 30-50 % of the space existing between two adjacent plates (13) and (14).

5. The method according to claim 2, **characterized in that** the fluidized bed (10) of the reduction catalyst (12) additionally operates as a dynamic mixer of the appropriate reductant (8) with gas flow components.

6. The method according to claim 2, **characterized in that** such highly porous materials as lightweight expanded clay aggregate and volcanic stone are used as preferred materials for a substrate (17) of an active coating (18) of the catalytic grains (6).

## Patentansprüche

1. Vorrichtung zum Entfernen von Stickoxiden und Kohlenmonoxid aus Gasemissionen, die einen Kanal zur Entfernung von verunreinigtem Gas umfasst, worin Katalysatoren zur CO-Oxidation und NOₓ-Reduktion nacheinander angeordnet sind, eine im Inneren jedes der Katalysatoren platzierte katalytische Ladung, eine Vorrichtung zum Ein spritzen eines Reduktionsmittels in den Kanal zur Entfernung von verunreinigtem Gas, **dadurch *gekennzeichnet,* dass** der CO-Oxidationskatalysator (11) und der NOₓ-Reduktionskatalysator (12) Platten (13, 14) umfassen, die parallel zueinander und längs zum Kanal zur Entfernung von verunreinigtem Gas (2) angeordnet sind, zwischen denen die Ladung katalytischer Körner (6) angeordnet ist und an denen Quellen (9) von Hochspannungswechselstrom angeschlossen sind, um ein elektrisches Hochspannungsfeld zwischen den Platten (13, 14) innerhalb der Katalysatoren (11, 12) zu erzeugen, das genügt, um die Ladung katalytischer Körner (6) zu verflüssigen, wobei die Oxidations- und Reduktionskatalysatoren (11, 12) sowohl von der rechten als auch der linken Seite durch vertikale engmaschige Gitter (15) verschlossen sind, die eine identische Form zum Innenquerschnitt der Katalysatoren (11, 12) aufweisen, vorgesehen um den Bereich der Ladung katalytischer Körner (6) zu begrenzen.

2. Verfahren zum Entfernen von Stickoxiden und Kohlenmonoxid aus Gasemissionen, das eine Oxidation von Kohlenmonoxid CO zu Kohlendioxid CO₂ umfasst, gefolgt von einer Reduktion von Stickoxiden NOₓ zu molekularem Stickstoff N₂ durch eine Umsetzung mit einem Reduktionsmittel, das zusätzlich in einen Kanal zur Entfernung von verunreinigtem Gas (2) zwischen einen Oxidationskatalysator und einen Reduktionskatalysator eingespritzt wird, **dadurch *gekennzeichnet,* dass** während der Reinigung von Gasemissionen die Ladung katalytischer Körner (6), unter dem Einfluss eines zwischen den Platten (13, 14) durch Quellen (9) von Hochspannungs-wechselstrom erzeugten elektrischen Hochspannungsfeldes, wie ein sich chaotisch bewegendes Wirbelbett (10) wirkt, das den gesamten Raum zwischen den benachbarten Platten (13, 14) einnimmt und in dem die Umwandlung der Schadstoffe CO und NOₓ stattfindet, wobei die Platten (13, 14) parallel zueinander und in Längsrichtung zum Kanal zur Entfernung von verunreinigtem Gas (2) angeordnet sind, und die katalytische Ladung (6) sowohl von der rechten als auch der linken Seite der Platten (13, 14) durch vertikale engmaschige Gitter (15) begrenzt ist, die eine identische Form zum Innenquerschnitt des Kanals zur Entfernung von verunreinigtem Gas aufweisen.

3. Verfahren nach Anspruch 2, **dadurch *gekennzeichnet,* dass** die Intensität der Bewegung des Wirbelbetts reguliert wird, indem der vertikale Abstand zwischen Platten (13) und (14) verändert wird.

4. Verfahren nach Anspruch 2, **dadurch *gekennzeichnet,* dass** die katalytischen Körner (6) derart beladen werden, dass sie 30-50 % des zwischen den beiden nebeneinander liegenden Platten (13) und (14) vorhandenen Raums einnehmen.

5. Verfahren nach Anspruch 2, **dadurch *gekennzeichnet,* dass** das Wirbelbett (10) des Reduktionskatalysators (12) zusätzlich als dynamischer Mischer des entsprechenden Reduktionsmittels (8) mit Gasströmungskomponenten funktioniert.

6. Verfahren nach Anspruch 2, **dadurch *gekennzeichnet,* dass** solch hochporöse Materialien wie leichtgewichtige Blähtonaggregate und Vulkangestein als bevorzugte Materialien für ein Substrat (17) einer aktiven Beschichtung (18) der katalytischen Körner (6) eingesetzt werden.

## Revendications

1. Appareil d'élimination d'oxydes d'azote et de monoxyde de carbone d'émissions de gaz, comprenant un canal de retrait de gaz contaminé où des catalyseurs d'oxydation de CO et de réduction de NOₓ sont positionnés séquentiellement, une charge catalytique placée à l'intérieur de chacun des catalyseurs, un dispositif d'injection d'un réducteur dans un canal de retrait de gaz contaminé, **caractérisé en ce que** le catalyseur d'oxydation de CO (11) et le catalyseur de réduction de NOₓ (12) comprennent des plaques (13, 14), positionnées parallèles les unes aux autres et dans le sens de la longueur par rapport au canal de retrait de gaz contaminé (2), entre lesquelles la charge de grains catalytiques (6) est placée et auxquelles des sources (9) de courant alternatif haute tension sont raccordées de manière à créer un champ électrique haute tension entre les plaques (13, 14) à l'intérieur des catalyseurs (11, 12) suffisant pour fluidiser la charge de grains catalytiques (6), les catalyseurs d'oxydation et de réduction (11, 12) étant fermés depuis les côtés à la fois droit et gauche par des grilles verticales à petites mailles (15), dont la forme est identique à la section transversale interne des catalyseurs (11, 12), destinées à restreindre la zone de la charge de grains catalytiques (6).

2. Procédé d'élimination d'oxydes d'azote et de monoxyde de carbone d'émissions de gaz comprenant une oxydation de monoxyde de carbone CO en dioxyde de carbone CO₂ suivie par une réduction d'oxydes d'azote NOₓ en azote moléculaire N₂ par une réaction avec un réducteur en outre injecté dans un canal de retrait de gaz contaminé (2) entre un catalyseur d'oxydation et un catalyseur de réduction, **caractérisé en ce que** durant la purification des émissions de gaz, la charge de grains catalytiques (6) sous l'influence d'un champ électrique haute tension créé entre les plaques (13, 14) par des sources (9) de courants alternatifs haute tension agit comme un lit fluidisé à mouvements chaotiques (10), qui occupe l'espace total entre les plaques adjacentes (13, 14) et à l'intérieur duquel la conversion des polluants CO et NOₓ a lieu, moyennant quoi les plaques (13, 14) sont positionnées parallèles les unes aux autres et dans le sens de la longueur par rapport au canal de retrait de gaz contaminé (2), et la charge catalytique (6) est restreinte depuis les côtés à la fois droit et gauche des plaques (13, 14) par des grilles à petites mailles verticales (15), dont la forme est identique à la section transversale interne du canal d'élimination des gaz contaminés.

3. Procédé selon la revendication 2, **caractérisé en ce que** l'intensité du mouvement du lit fluidisé est régulée par modification d'une distance verticale entre les plaques (13) et (14).

4. Procédé selon la revendication 2, **caractérisé en ce que** les grains catalytiques (6) sont chargés de manière à remplir 30 à 50 % de l'espace existant entre 2 plaques adjacentes (13) et (14).

5. Procédé selon la revendication 2, **caractérisé en ce que** le lit fluidisé (10) du catalyseur de réduction (12) fonctionne en outre comme un mixeur dynamique du réducteur approprié (8) avec les composants du flux de gaz.

6. Procédé selon la revendication 2, **caractérisé en ce que** des matériaux aussi poreux qu'un agrégat léger d'argile expansée ou que la roche volcanique sont utilisés en tant que matériaux préférés pour un substrat (17) d'un revêtement actif (18) des grains catalytiques (6).
